# EUROPÄISCHE PATENTSCHRIFT

(11) **EP 2 467 289 B1**
(45) Veröffentlichungstag und Bekanntmachung des Hinweises auf die Patenterteilung: **22.01.2014**
(21) Anmeldenummer: 10740536.7
(22) Anmeldetag: 27.07.2010
(51) Int. Cl.: B62D 1/184

(54) **VERSTELLBARE LENKSÄULE FÜR EIN KRAFTFAHRZEUG**
ADJUSTABLE STEERING COLUMN FOR A MOTOR VEHICLE
COLONNE DE DIRECTION RÉGLABLE POUR VÉHICULE À MOTEUR

(30) Priorität: 21.08.2009 DE 102009038317
(43) Veröffentlichungstag der Anmeldung: 27.06.2012
(73) Patentinhaber: ThyssenKrupp Presta Aktiengesellschaft, 9492 Eschen (LI)
(72) Erfinder: SCHNITZER, Rony, FL-9491 Ruggell (LI)
(74) Vertreter: Hofmann, Ralf U.
(86) Internationale Anmeldenummer: PCT/EP2010/004580
(87) Internationale Veröffentlichungsnummer: WO 2011/020538

(56) Entgegenhaltungen:
- EP-A1- 0 900 943
- DE-A1-102006 034 714
- GB-A- 2 295 219

## Beschreibung

Die Erfindung bezieht sich auf eine verstellbare Lenksäule für ein Kraftfahrzeug, umfassend eine Manteleinheit, die eine Lenkspindel drehbar lagert, erste und zweite karosseriefest befestigbare Seitenwangen, zwischen denen die Manteleinheit angeordnet ist, eine Feststelleinrichtung, in deren geöffnetem Zustand die Manteleinheit gegenüber den Seitenwangen zumindest in eine Verstellrichtung verstellbar ist und in deren geschlossenem Zustand die eingestellte Position der Manteleinheit gegenüber den Seitenwangen festgestellt ist und die einen die Seitenwangen durch Öffnungen durchsetzenden Spannbolzen, der beim Öffnen und Schließen der Feststelleinrichtung in seiner axialen Richtung verschoben wird, und erste und zweite Feststellelemente umfasst, zwischen denen die Manteleinheit angeordnet ist und von denen das erste Feststellelement im geschlossenen Zustand der Feststelleinrichtung mit einem ersten Gegenfeststellelement zusammenwirkt, das an der ersten Seitenwange angeordnet ist oder von dieser gehalten wird oder an der Manteleinheit angeordnet ist oder von dieser gehalten wird oder an einer zwischen der Manteleinheit und den Seitenwangen angeordneten Zwischeneinheit angeordnet ist oder von dieser gehalten wird, und von denen das zweite Feststellelement im geschlossenen Zustand der Feststelleinrichtung mit einem zweiten Gegenfeststellelement zusammenwirkt, das an der zweiten Seitenwange angeordnet ist oder von dieser gehalten wird oder an der Manteleinheit angeordnet ist oder von dieser gehalten wird oder an der Zwischeneinheit angeordnet ist oder von dieser gehalten wird.

Derartige Lenksäulen, bei denen ein Spannbolzen karosserieseitig festgelegte Seitenwangen durchsetzt, zwischen denen die die Lenkspindel drehbar lagernde Manteleinheit angeordnet ist, und beidseitig der Seitenwangen Feststellelemente zur Feststellung der eingestellten Position der Lenksäule im geschlossenen Zustand der Feststelleinrichtung vorhanden sind, sind in unterschiedlichen Ausführungsformen bekannt und vielfach im Einsatz. Durch den die beiden Seitenwangen durchsetzenden Spannbolzen und die beidseitig der Seitenwangen liegenden Feststellelemente kann eine kompakte und stabile Ausbildung erreicht werden, bei der die Lastableitung möglichst gleichmäßig in die Karosserie erfolgt.

Die Feststellung der mindestens einen Verstellmöglichkeit der Lenksäule im geschlossenen Zustand der Feststelleinrichtung kann hierbei durch formschlüssig wirkende Elemente oder durch kraftschlüssig wirkende Elemente oder durch sowohl kraftschlüssig als auch formschlüssig wirkende Elemente oder durch Kombinationen hiervon erreicht werden, wobei diese Elemente die genannten Feststellelemente und Gegenfeststellelemente umfassen. Die Lenksäule kann in ihre Längsrichtung oder in ihrer Höhe bzw. Neigung oder sowohl in der Länge als auch in der Höhe bzw. Neigung verstellbar sein.

Derartige Lenksäulen sind beispielsweise aus der DE 10 2007 003 091 B3, WO 2007/009576 A1, WO 2008/011945 A1 und EP 802 104 A1 bekannt. So geht aus der WO 2007/009576 A1 eine verstellbare Lenksäule hervor, bei der die auf dem Spannbolzen beidseitig der Seitenwangen angeordneten Feststellelemente zumindest auf einer der beiden Seiten der Manteleinheit mit einem Gegenfeststellelement zusammenwirken, welches eine im unbelasteten Zustand federnd aus der Oberfläche des Gegenfeststellelements herausragende Schuppe aufweist. Durch diese Schuppe kann durch formschlüssiges Zusammenwirken mit dem Feststellelement eine zusätzliche Haltekraft gegen eine Versschiebung, insbesondere im Crashfall, der Lenksäule aufgebracht werden. Zur Distanzierung des Feststellelements vom Gegenfeststellelement im geöffneten Zustand der Feststelleinrichtung ist hierbei mindestens ein zwischen dem Feststellelemente und Gegenfeststellelement wirkendes Federelement vorgesehen. Bei der aus der DE 10 2007 003 091 B3 bekannten Einrichtung wird mindestens eines der Feststellelemente von einer Lamelle gebildet, welche an ihren in Richtung der Höhenverstellung ausgerichteten Rändern Verzahnungen aufweist. Im geschlossenen Zustand der Feststelleinrichtung wird das Feststellelement gegen die Kraft von Federarmen, die das Feststellelement im geöffneten Zustand der Feststelleinrichtung von der Seitenwange distanziert halten, an die Seitenwange angedrückt, wobei die Verzahnungen des Feststellelements mit Verzahnungen der Seitenwange in Eingriff gelangen, um die Höhenverstellung zu blockieren. Bei den aus der WO 2008/011945 A1 und EP 802 104 A1 bekannten Lenksäulen erfolgt die Feststellung der Verstellbarkeit der Lenksäule im geschlossenen Zustand der Feststelleinrichtung nur durch reibschlüssig zusammenwirkende Elemente, wobei im letzteren Fall beidseitig der Seitenwangen angeordnete, sich kreuzende Federpakete vorgesehen sind, um die Klemmkräfte im geschlossenen Zustand der Feststelleinrichtung zu erhöhen.

Weiters zeigt die DE 102 34 514 B3 eine Lenksäule mit einer Feststelleinrichtung, bei der an einer Seite an der Manteleinheit und an der Seitenwange Verzahnungen angeordnet bzw. gehalten sind, die sich zum Einen in Richtung der Längsverstellung, zum Anderen in Richtung der Höhen- bzw. Neigungsverstellung erstrecken und die im geschlossenen Zustand der Feststelleinrichtung mit Verzahnungen von auf dem Spannbolzen angeordneten Teilen zusammenwirken. Damit die beiden Verstellrichtungen simultan ver- und entriegelt werden können, muss der Abstand der beiden die Verzahnungen aufweisenden Teile genau angepasst werden. Im geöffneten Zustand der Feststelleinrichtung werden die Verzahnungen der auf dem Spannbolzen angeordneten Teile durch eine ebenfalls auf dem Spannbolzen angeordnete Feder außer Eingriff mit den Verzahnungen der Manteleinheit bzw. der Seitenwange gebracht. Eine ähnliche verstellbare Lenksäule geht auch aus der DE 10 2006 016 361 B3 hervor, wobei hier die in die beiden Verstellrichtungen wirkenden Verzahnungen an einem einzelnen auf dem Spannbolzen angeordneten Feststellteil ausgebildet sind.

Neben solchen Feststelleinrichtungen, bei denen beidseitig der Manteleinheit vom Spannbolzen durchsetzte Seitenwangen vorhanden sind, sind auch noch Lenksäulen mit Feststelleinrichtungen bekannt, bei denen nur auf einer Seite der Manteleinheit eine Seitenwange angeordnet ist, an welche die Manteleinheit im geschlossenen Zustand der Feststelleinrichtung angedrückt wird. Der Spannbolzen ragt hierbei durch die Seitenwange in die Manteleinheit hinein. Derartige Feststelleinrichtungen gehen beispielsweise aus der EP 0 836 981 B1 und DE 10 031 721 C1 hervor. Bei diesen Ausbildungen ist eine massivere und aufwendigere Führung der Manteleinheit erforderlich, um eine ausreichende Stabilität zu erhalten und einem Verkippen bzw. Verkanten entgegenzuwirken.

Aufgabe der Erfindung ist es eine Lenksäule mit einer in einfacher Weise ausbildbaren Feststelleinrichtung bereitzustellen, bei der beim Öffnen der Feststelleinrichtung eine kontrolliertere Distanzierung von die Feststellung bewirkenden Elementen erreicht wird. Erfindungsgemäß gelingt dies durch eine verstellbare Lenksäule mit den Merkmalen des Anspruchs 1. Aus den abhängigen Ansprüchen gehen vorteilhafte Weiterbildungen hervor.

Bei der Feststelleinrichtung einer Lenksäule gemäß der Erfindung ist im geschlossenen Zustand der Feststelleinrichtung ein Anschlagelement, das im Bereich zwischen den beiden Seitenwangen auf dem oder am Spannbolzen angeordnet ist von einem Gegenanschlag beabstandet. Beispielsweise kann das Anschlagelement von einem vom Spannbolzen durchsetzten und axial unverschiebbar auf diesem angeordneten Anschlagring gebildet werden. Der Gegenanschlag kann an einer der beiden Seitenwangen oder einem mit dieser verbundenen Teil, wobei er vorzugsweise von der Innenfläche der Seitenwange gebildet wird, oder an der Manteleinheit oder einem mit dieser verbundenen Teil oder einer zwischen der Manteleinheit und den Seitenwangen angeordneten Zwischeneinheit, wobei er vorzugsweise von der Innenfläche eines zwischen einer der Seitenwangen und der Manteleinheit angeordneten Seitenschenkel der Zwischeneinheit oder einem mit dieser verbundenen Teil gebildet wird, angeordnet sein. Durch ein Anschlagen des Anschlagelements am Gegenanschlag wird die axiale Verschiebung des Spannbolzens im geöffneten Zustand der Feststelleinrichtung gegenüber seiner im geschlossenen Zustand der Feststelleinrichtung eingenommenen Position begrenzt.

Vorteilhafterweise kann auf diese Weise ein im geöffneten Zustand der Feststelleinrichtung vorhandenes Spiel zwischen Elementen der Feststelleinrichtung, die beidseitig einer die zentrale Längsache der Lenkspindel enthaltenden, im Montagezustand der Lenksäule vertikalen, parallel zu den Seitenwangen liegenden Mittelebene bzw. beidseitig der Manteleinheit liegen, in kontrollierter Weise aufgeteilt werden.

Eine vorteilhafte Ausführungsform der Erfindung sieht vor, dass mindestens ein federelastisches Element vorhanden ist, welches beim Öffnen der Feststelleinrichtung den Spannbolzen axial verschiebt, bis das Anschlagelement in Anlage an den Gegenanschlag gelangt. Günstigerweise ist weiters auf der Seite der die Längsachse der Lenkspindel aufweisenden vertikalen Mittelebene bzw. auf der Seite der Manteleinheit, von der die axiale Verschiebung des Spannbolzens beim Öffnen der Feststelleinrichtung weggerichtet ist, mindestens ein zweites federelastisches Element vorhanden. Dieses wirkt im Sinne einer Distanzierung von auf dieser Seite der vertikalen Mittelebene bzw. der Manteleinheit angeordneten, im geschlossenen Zustand der Feststelleinrichtung zur Feststellung der Verstellung zusammenwirkenden Elementen. Hierbei ist die vom ersten federelastischen Element ausgeübte Federkraft bzw. von den ersten federelastischen Elementen insgesamt ausgeübte Federkraft größer als die vom zweiten federelastischen Element ausgeübte Federkraft bzw. die von den zweiten federelastischen Elementen insgesamt ausgeübte Federkraft. Besonders vorteilhaft ist es, wenn die Federkraft, des federelastischen Elementes, das auf dem vom Nocken-Kulissenscheiben-Paar abgewandten Ende des Spannbolzens angeordnet ist, größer ist als die Federkraft, des federelastischen Elements, das auf derselben Seite, wie das Nocken-Kulissenscheiben-Paar angeordnet ist. Anstelle eines Nocken-Kulissenscheiben-Paars können auch andere Spannelemente zum Spannen der Feststelleinrichtung in deren geschlossenem Zustand vorgesehen sein, beispielsweise auch hydraulisch, pneumatisch oder elektrisch ansteuerbare. Zunächst erfolgt also die axiale Verschiebung des Spannbolzens bis das Anschlagelement an den Gegenanschlag anläuft, wodurch eine Distanzierung von die Feststellung bewirkenden Elementen auf der einen Seite der Manteleinheit bzw. der vertikalen Mittelebene erreicht wird, und in der Folge wird der restliche beim Öffnen der Feststelleinrichtung zur Verfügung gestellte Weg genutzt, um auf der anderen Seite der Manteleinheit bzw. der vertikalen Mittelebene dort angeordnete die Feststellung bewirkende Elemente zu distanzieren.

Durch diese Ausbildung kann auch ein Verhaken von die Feststellung bewirkenden Elementen im geöffneten Zustand der Feststelleinrichtung, wenn die Lenksäule verstellt werden soll, verhindert werden. Diese Ausbildung ist somit insbesondere vorteilhaft, wenn zumindest teilweise Elemente, die die Feststellung der Verstellbarkeit (auch oder nur) über einen Formschluss bewirken, eingesetzt werden.

Eine in erfindungsgemäßer Weise ausgebildete verstellbare Lenksäule kann in ihrer Länge oder in ihrer Höhe bzw. Neigung oder sowohl in ihrer Länge als auch in ihrer Höhe bzw. Neigung verstellbar ausgebildet sein. Die Manteleinheit wird hierbei bei einer Verstellung der Lenksäule in die jeweilige Verstellrichtung gegenüber den karosseriefesten Seitenwangen in diese Verstellrichtung verstellt. Bei der Feststellung im geschlossenen Zustand der Feststelleinrichtung wirken die Feststellelemente mit den Gegenfeststellelementen zusammen, wobei die Feststellwirkung durch reibschlüssig wirkende Elemente oder durch formschlüssig wirkende Elemente oder durch sowohl reibschlüssig (Fixierung durch Reibschluss) als auch formschlüssig (Fixierung durch Formschluss) wirkende Elemente oder durch Kombinationen hiervon erreicht werden kann. Als Feststellelement kann beispielsweise für eine der möglichen Verstellrichtungen eine Platte mit Verzahnungen eingesetzt werden, die auf dem Spannbolzen verschiebbar angeordnet ist und mit einem Gegenfeststellelement, das eine entsprechende Gegenverzahnung aufweist, das an der Manteleinheit angeordnet oder integral in die Manteleinheit eingearbeitet ist, zusammenwirken. Denkbar und möglich ist der Einsatz von reibungserhöhenden Oberflächenschichten.

Es ist denkbar und möglich, die beiden Varianten - Fixierung durch Formschluss und Fixierung durch Reibschluss - zu kombinieren. So kann beispielsweise für die Fixierung der Verstellung in eine der Verstellrichtungen eine Variante mit Verzahnungen auf einer Seite der Manteleinheit vorgesehen sein und für die Fixierung der Verstellung in die andere Verstellrichtung die entsprechenden Oberflächen der Seitenwange und der Manteleinheit auf der anderen Seite der Manteleinheit vorgesehen sein. Entsprechend kann es bei einer derartigen Ausführung der Erfindung vorgesehen sein, auf einer Seite der Manteleinheit bzw. vertikalen Mittelebene eine Distanzierung bereitzustellen, welche ausreichend groß ist um den Verzahnungseingriff von im geschlossenen Zustand der Feststelleinrichtung die Feststellung bewirkenden Elementen vollständig zu lösen, während auf der anderen Seite der Manteleinheit bzw. vertikalen Mittelebene ein geringerer Hub bereitgestellt wird, wie er zur Lösung einer reibschlüssigen Feststellung ausreichend ist.

Vorteilhafterweise können bei einer erfindungsgemäßen Ausbildung Elastizitäten in der Lenksäule, insbesondere in den karosseriefest befestigbaren Seitenwangen, in der Manteleinheit oder in einer zwischen der Manteleinheit und den Seitenwangen angeordneten Zwischeneinheit optimal berücksichtigt werden, um eine angepasste Bewegung der die Feststellung bewirkenden Elemente beim Öffnen und Schließen der Feststelleinrichtung bereitzustellen.

Weitere Vorteile und Einzelheiten der Erfindung werden im Folgenden anhand der beiliegenden Zeichnung erläutert. In dieser zeigen:
Fig. 1 eine Schrägsicht einer Lenksäule gemäß einer Ausführungsform der Erfindung (der Betätigungshebel teilweise abgeschnitten), wobei die in der Montagestellung unten liegende Seite der Lenksäule sichtbar ist (die Lenksäule ist gegenüber der Montagestellung um die Längsachse der Lenkspindel um 180° gedreht);
Fig. 2 die Lenksäule von Fig. 1 aus einem anderen Blickwinkel, Teile der Lenksäule explosionsartig auseinandergezogen dargestellt;
Fig. 3 die Lenksäule von Fig. 1 aus noch einem anderen Blickwinkel;
Fig. 4 einen Teil eines Querschnitts durch die Lenksäule von Fig. 1 im Bereich des Spannbolzens, im geöffneten Zustand der Feststelleinrichtung;
Fig. 5 einen Querschnitt entsprechend Fig. 4 im geschlossenen Zustand der Feststelleinrichtung;
Fig. 6 eine modifizierte Ausbildungsform einer Lenksäule gemäß der Erfindung in Querschnittsdarstellungen analog den Fig. 4 im geschlossenen Zustand der Feststelleinrichtung;
Fig. 7 Veranschaulichung des ersten Feststellelements entsprechend der Ausführungsform der Fig. 6 in einer Sicht weg von der durch die Längsachse 11 verlaufenden Mittelebene, die parallel zu den Seitenwangen 1, 2 verläuft;
Fig. 8 Veranschaulichung des ersten Gegenfeststellelements entsprechend der Ausführungsform der Fig. 6 in einer Sicht weg von der Seite hin in Richtung der durch die Längsachse 11 verlaufenden Mittelebene, die parallel zu den Seitenwangen 1, 2 verläuft;
Fig. 9 Veranschaulichung des zweiten Feststellelements entsprechend der Ausführungsform der Fig. 6 in einer Sicht weg von der durch die Längsachse 11 verlaufenden Mittelebene, die parallel zu den Seitenwangen 1, 2 verläuft;
Fig. 10 und Fig. 11 unterschiedliche Möglichkeiten der Anbringung des Anschlagelements auf dem Spannbolzen;
Fig. 12 eine weitere Ausbildungsmöglichkeit eines Anschlagelements;
Fig. 13 das Anschlagelement von Fig. 12 auf dem Spannbolzen festgelegt,
Fig. 14 und Fig. 15 jeweils eine weitere Ausbildungsmöglichkeit eines Anschlagelements.

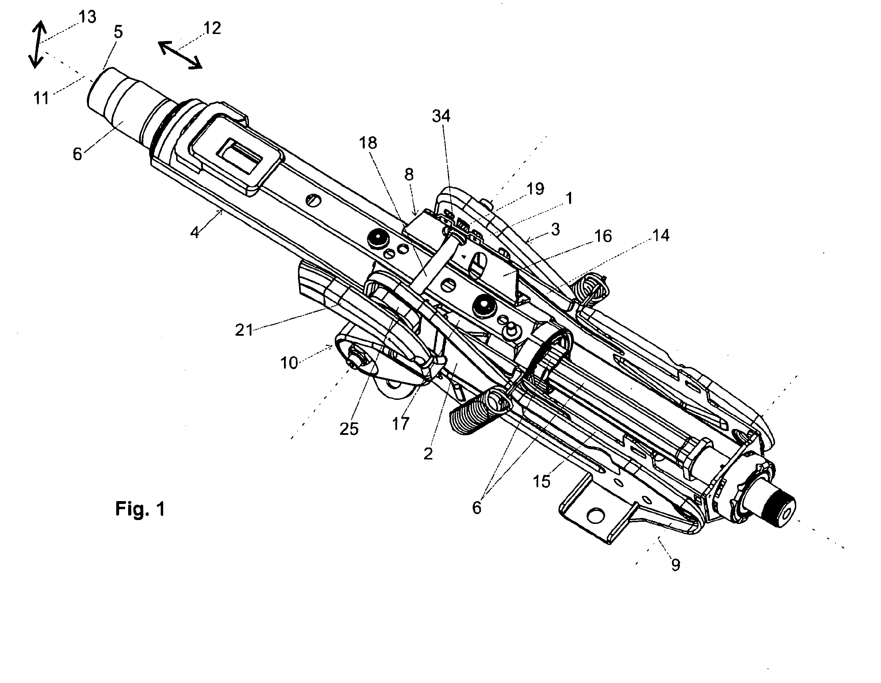

Ein erstes Ausführungsbeispiel einer verstellbaren Lenksäule gemäß der Erfindung wird im Folgenden anhand der Fig. 1 bis 5 erläutert. Die Lenksäule umfasst erste und zweite Seitenwangen 1, 2, die an der Karosserie des Kraftfahrzeuges zu befestigen sind. Hierzu sind die Seitenwangen 1, 2 im gezeigten Ausführungsbeispiel Teil einer Trageinheit 3, die insgesamt an der Karosserie des Kraftfahrzeugs zu befestigen ist. Auch eine einzelne Anbringung der Seitenwangen 1, 2 an der Karosserie ist denkbar und möglich.

Eine Manteleinheit 4 lagert einen an das lenkradseitige Ende 5 der Lenkspindel anschließenden Abschnitt der Lenkspindel 6 drehbar um die Längsachse 11 der Lenkspindel 6. Die Manteleinheit 4 kann, wie dargestellt, umfangsgeschlossen oder (zumindest teilweise) umfangsoffen ausgebildet sein.

Die Trageinheit 3 kann beispielsweise wie dargestellt mindestens einen in der Montagelage der Lenksäule oberhalb der Manteleinheit 4 liegenden Verbindungsabschnitt 7 aufweisen, von dem die Seitenwangen 1, 2 nach unten abstehen. In einer Ansicht in axialer Richtung der Lenkspindel 6 gesehen ergibt sich damit eine U-förmige Ausbildung der Trageinheit 3.

Zwischen der Trageinheit 3 und der Manteleinheit 4 liegt eine Zwischeneinheit 8, die gegenüber der Trageinheit 3 um eine rechtwinkelig zur Achse der Lenkspindel 6 stehende, in der Montagelage horizontal liegende Achse 9 verschwenkbar gelagert ist.

Die Lenksäule umfasst weiters eine Feststelleinrichtung 10. Im geschlossenen Zustand der Feststelleinrichtung 10 ist die Position der Manteleinheit 4 gegenüber der Trageinheit 3, sowie der Zwischeneinheit 8, festgestellt. Im geöffneten Zustand der Feststelleinrichtung 10 kann die Manteleinheit 4 gegenüber der Trageinheit 3 in Richtung der Längsachse 11 der Lenkspindel 6 (=Längenverstellrichtung 12) und in eine Verstellrichtung 13 für eine Höhen- bzw. Neigungsverstellung der Lenksäule verstellt werden. Bei der Verstellung in die Verstellrichtung 13 verschwenkt sich die Zwischeneinheit 8 gegenüber der Trageinheit 3 um die Achse 9. Bei einer Verstellung in die Längenverstellrichtung 12 verschiebt sich die Manteleinheit 4 gegenüber der Zwischeneinheit 8 in Richtung der Längsachse 11 der Lenkspindel 6. Zur Ermöglichung dieser Verschiebung besitzt die Lenkspindel 6 in bekannter Weise gegeneinander teleskopierbare Abschnitte. Der vom lenkradseitigen Ende 5 abgewandte Abschnitt der Lenkspindel 6 wird mit Vorteil in einem Lager 54, das an der Zwischeneinheit 8 fixiert ist, gelagert. Die Abstützung kann alternativ auch einfach über das hier nicht dargestellte Kardangelenk erfolgen. Alternativ ist es auch denkbar und möglich, die Lenkspindel 6 nicht teleskopierbar auszuführen. Dies ist insbesondere bei Lenksäulen anwendbar, die nicht in ihrer Länge verstellbar sind. Es ist aber auch denkbar eine Verschiebung des hier nicht dargestellten Kardangelenks zuzulassen.

Die Zwischeneinheit 8 besitzt zwischen der jeweiligen Seitenwange 1, 2 und der Manteleinheit 4 liegende Seitenschenkel 14, 15. Die Zwischeneinheit 8 umgibt die Manteleinheit 4 zumindest über einen Großteil ihres Umfangs. Im Ausführungsbeispiel sind hierzu an den Seitenschenkeln 14, 15 zumindest anschließend an ihre Vebindungsstelle mit dem jeweiligen Seitenschenkel 14, 15 schräg aufeinander zu verlaufende Klemmstücke oder Stege 16, 17 angebracht. Durch zusammenwirkende Flächen ist die Manteleinheit 4 gegenüber der Zwischeneinheit 8 verdrehgesichert. Beispielsweise kann die Manteleinheit 4 wie dargestellt eine achteckige Ausbildung aufweisen.

Die Feststelleinrichtung 10 umfasst einen Spannbolzen 18, der die Seitenwangen 1, 2 der Trageinheit 3 durch Öffnungen 19, 20 durchsetzt. Die Öffnungen 19, 20 sind hier in Form von in die Verstellrichtung 13 verlaufenden Langlöchern ausgebildet. Weiters durchsetzt der Spannbolzen 18 Öffnungen in den Seitenschenkeln 14, 15 der Zwischeneinheit 8, von deren Rändern er in die Verstellrichtung 13 unverschiebbar gehalten wird.

Zum Öffnen und Schließen der Feststelleinrichtung 10 dient ein Betätigungshebel 21, der mit einer Nockenscheibe 22 verbunden ist, die er bei seiner Verdrehung um die Achse des Spannbolzens 18 mitnimmt und die mit einer Kulissenscheibe 23 zusammenwirkt.

Auf dem Spannbolzen 18 sind erste und zweite Feststellelemente 24, 25 angeordnet, die vom Spannbolzen durch Öffnungen durchsetzt werden. Die Feststellelemente 24, 25 liegen beidseitig der Seitenwangen 1, 2, so dass die Seitenwangen 1, 2 der Trageinheit 3 zwischen den Feststellelementen 24, 25 angeordnet sind. Die Feststellelemente 24, 25 sind durch erste und zweite Halteelemente 36, 37, die vom Spannbolzen 18 durchsetzt sind, geführt und gelagert. Beispielsweise wird hierzu eine zentrale Öffnung des Feststellelements 24, 25 von einem Vorsprung des Halteelements 36, 37 durchsetzt. Die Feststellelemente 24, 25 wirken im geschlossenen Zustand der Feststelleinrichtung mit ersten und zweiten Gegenfeststellelementen 26, 27 zusammen, die im gezeigten Ausführungsbeispiel von den nach außen gerichteten Oberflächen der Seitenwangen 1, 2 und an diesen ausgebildeten Strukturen gebildet werden. Die Gegenfeststellelemente 26, 27 könnten auch von Teilen gebildet werden, die an den Seitenwangen 1, 2 zumindest in die Verstellrichtung 13 unverschiebbar gehalten sind, in welche sie wirken.

Die Feststellelemente 24, 25 werden im gezeigten Ausführungsbeispiel jeweils von einer Lamelle mit im unbelasteten Zustand federnd aus ihrer Oberfläche herausragenden Schuppen 28 gebildet. Diese Schuppen können im geschlossenen Zustand der Feststelleinrichtung im Bereich einer Vertiefung 29 im jeweiligen Gegenfeststellelement 26, 27 zu liegen kommen, sodass bei im Falle eines einsetzenden Durchrutschens des Feststellelements 24, 25 gegenüber dem Gegenfeststellelement 26, 27 (bei einer die wirkenden Reibkräfte überwindenden in die Verstellrichtung 13 wirkenden Kraft) der Rand der Schuppe 28 an den Rand der Vertiefung 29 in Anschlag gelangt, wodurch in der Folge eine zusätzliche, formschlüssig wirkende Haltekraft gegen eine Verschiebung des jeweiligen Feststellelements 24, 25 gegenüber dem Gegenfeststellelement 26, 27 bereitgestellt wird. Eine solche Ausbildung ist in analoger Weise beispielsweise aus dem eingangs genannten Stand der Technik entsprechend der WO 2007/009576 A1 bekannt.

Die Feststellelemente 24, 25 können mit den Gegenfeststellelementen 26, 27 jeweils reibschlüssig oder formschlüssig oder, beispielsweise mit ihrer zuvor beschriebenen Art, sowohl formschlüssig als auch reibschlüssig zusammenwirken. Zur Ausbildung eines Formschlusses kann beispielsweise auch eine Konstruktion mit mindestens einem von einer Zahnplatte gebildeten Feststellelement eingesetzt werden, wie sie beispielsweise aus dem eingangs genannten Stand der Technik entsprechend der DE 10 2007 003 091 B3 bekannt ist.

Wenn im geschlossenen Zustand der Feststelleinrichtung die Feststellelemente 24, 25 gegen die Gegenfeststellelemente 26, 27 verspannt werden, so werden dadurch auch die Seitenwangen 1, 2 an die an diesen anliegenden Seitenschenkel 14, 15 der Zwischeneinheit 8 und diese wiederum an die an diesen anliegenden Seitenflächen der Manteleinheit 4 angedrückt. Im Beispiel sind zur Herstellung eines definierten Kontakts an den Seitenwangen Sicken oder Prägungen 38 ausgebildet. Dadurch wird die Verschiebung der Manteleinheit 4 gegenüber der Zwischeneinheit 8 in die Längenverstellrichtung 12 festgestellt. Diese Feststellung ist in diesem Ausführungsbeispiel somit reibschlüssig.

Das erste Feststellelement 24 wird von der auf dem Spannbolzen 18 angeordneten Mutter 30 bzw. der zwischen der Mutter 30 und dem ersten Feststellelement 24 liegenden Scheibe gegen eine vom Betätigungshebel 21 weggerichtete axiale Verschiebung auf dem Spannbolzen 18 gesichert. Von einem ersten federelastischen Element 32, welches hier in Form von mindestens einer Federzunge am Feststellelement 24 gebildet wird, wird das erste Feststellelement 24 an die Scheibe 31 angedrückt. Die Federzunge stützt sich hierbei gegen die erste Seitenwange 1 ab. Das Feststellelement 24 wird dadurch in Anschlag an das erste Halteelement 36, und dieses wiederum in Anschlag mit der Scheibe 31, gehalten und folgt damit einer axialen Verschiebung des Spannbolzens 18. Die Scheibe 31 kann auch als Axialdrucklager ausgebildet sein, so dass durch Wälzkörper beim Verdrehen der Spannachse die Reibung reduziert wird.

Das erste Feststellelement 24 könnte beispielsweise auch stoffschlüssig, z. B. durch Verschweißen, mit dem Spannbolzen 18 verbunden sein oder einstückig mit diesem ausgebildet sein, beispielsweise in Form eines am Spannbolzen 18 angeordneten Kopfes. Die dargestellte lose Lagerung auf dem ersten Halteelement 36, das mit einem Fortsatz die Langlochausnehmung des ersten Feststellelements durchdringt ist jedoch zu bevorzugen.

Beim Öffnen und Schließen der Feststelleinrichtung mittels des Betätigungshebels 21 wird der Spannbolzen 18 in seine axiale Richtung gegenüber den Seitenwangen 1, 2 verschoben, wobei das auf dem Spannbolzen 18 angeordnete erste Feststellelement 24 bei der axialen Verschiebung des Spannbolzens 18 beim Öffnen und Schließen der Feststelleinrichtung 10 mit dem Spannbolzen 18 mitbewegt wird.

Das zweite Feststellelement 25 ist in axialer Richtung des Spannbolzens 18 verschiebbar auf diesem angeordnet und ein federelastisches Element 33 wirkt im Sinne einer Distanzierung des zweiten Feststellelements 25 vom zweiten Gegenfeststellelement 27. Das zweite federelastische Element 33 ist im gezeigten Ausführungsbeispiel in analoger Weise wie das erste federelastische Element 32 in Form mindestens einer Federzunge des zweiten Feststellelements 25 ausgebildet, die sich an der Seitenwange 2 abstützt.

Die federelastischen Elemente 32, 33 könnten sich beispielsweise auch an den Seitenschenkeln 14, 15 der Zwischeneinheit 8 abstützen, wobei hier das Design entsprechend angepasst werden müsste, damit die federelastischen Elemente die Öffnungen 19 bzw. 20 der Seitenwangen 1 bzw. 2 durchgreifen können. Denkbar und möglich ist für das erste und/oder zweite federelastische Element 32, 33 auch der Einsatz einer jeweiligen Schraubenfeder, die zwischen dem erstne Halteelement 36 bzw. zweiten Halteelement 37 und der jeweiliegen Seitenwange 1, 2 oder dem jeweiligen Seitenschenkel 14, 15 wirken. In diesem Fall sollte das jeweilige Feststellelement mit dem zugeordneten Halteelement in der Verschieberichtung des Spannbolzens 18 unverschiebbar festgelegt sein. Das erste und/oder zweite federelastische Element 32, 33 könnte auch zwischen dem jeweiligen Feststellelement 24, 25 und der jeweiligen Seitenwange 1, 2 oder dem jeweiligen Seitenschenkel 14, 15 wirken.

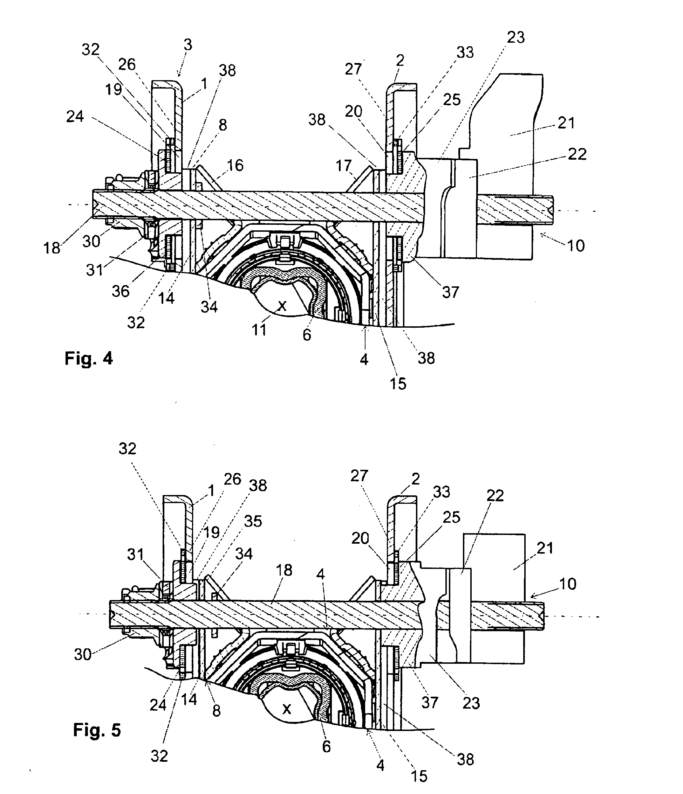

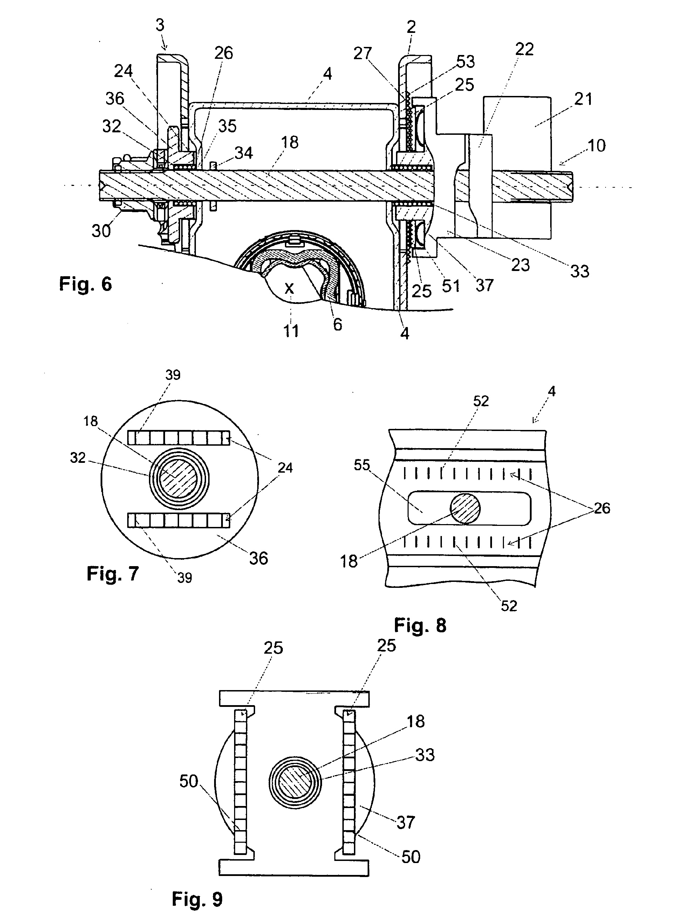

Auf dem Spannbolzen 18 ist im Bereich zwischen den Seitenwangen 1, 2 ein Anschlagelement 34 angeordnet, welches gegenüber dem Spannbolzen 18 axial unverschiebbar ist, beispielsweise durch eine Verschweißung, wie in Fig. 9 dargestellt. Im geschlossenen Zustand der Feststelleinrichtung 10 (vgl. Fig. 5) ist das Anschlagelement 34 von einem Gegenanschlag 35 beabstandet, an dem es im geöffneten Zustand der Feststelleinrichtung (vgl. Fig. 4) anliegt. Der Gegenanschlag 35 wird im gezeigten Ausführungsbeispiel von der nach innen (d.h. zum anderen Seitenschenkel 15 gerichteten) Oberfläche des Seitenschenkels 14 der Zwischeneinheit 8 gebildet, der der ersten Seitenwange 1 benachbart ist. Das Anschlagelement 34 liegt in diesem Ausführungsbeispiel somit auch zwischen den Seitenschenkeln 14, 15 der Zwischeneinheit 8. In der bevorzugten Ausführungsform ist das Anschlagelement 34 auf der von der Nockenscheibe 22 abgewandten Seite der parallel zu den Seitenwangen 1, 2 durch die Längsachse 11 verlaufenden Mittelebene auf dem Spannbolzen 18 angeordnet.

Wenn die Feststelleinrichtung 10 ausgehend von ihrem in Fig. 5 dargestellten geschlossenen Zustand geöffnet wird, so wird zunächst das erste Feststellelement 24 vom ersten Gegenfeststellelement 26 durch das erste federelastische Element 32 distanziert, wobei der Spannbolzen 18 mitgenommen und somit axial in die vom Betätigungshebel 21 weggerichtete Richtung verschoben wird, bis das Anschlagelement 34 am Gegenanschlag 35 anliegt. Zu diesem Zweck ist das erste federelastische Element 32 so ausgelegt, dass die von ihm ausgeübte Kraft die vom zweiten federelastischen Element 33 ausgeübte Kraft übertrifft und eine Verschiebung des Anschlagelements 34 an den Gegenanschlag 35 gegen die vom zweiten federelastischen Element 33 ausgeübte Kraft bewirkt wird. Nachdem das Anschlagelement 34 zur Anlage am Gegenanschlag 35 gekommen ist, kann sich der Spannbolzen 18 nicht weiter in diese axiale Richtung verschieben und der restliche beim Öffnen der Feststelleinrichtung 10 freigegebene Weg wird für eine in die entgegengesetzte Richtung gerichtete Verschiebung des zweiten Feststellelements 25 gegenüber dem zweiten Gegenfeststellelement 27 aufgebraucht, wodurch das zweite Feststellelement 25 vom zweiten Gegenfeststellelement 27 distanziert wird (vgl. Fig. 4).

Durch die erfindungsgemäße Ausbildung werden die beim Öffnen der Feststelleinrichtung freigegebenen Federwege somit in definierter Weise auf die beiden Feststellelemente 24, 25, die auf gegenüberliegenden Seiten der Manteleinheit 4 bzw. auf gegenüberliegenden Seiten einer die Längsachse 11 der Lenkspindel 6 aufweisenden, vertikalen, parallel zu den Seitenwangen 1, 2 liegenden Mittelebene liegen, in vorgebbarer Weise aufgeteilt.

Dadurch kann beispielsweise sichergestellt werden, dass es im geöffneten Zustand der Feststelleinrichtung nicht zu einem Verhaken der Schuppen 28 der Feststellelemente 24, 25 mit den Vertiefungen 19 der Gegenfeststellelementen 26, 27 kommt.

In den Fig. 6, 7, 8 und 9 ist eine modifizierte Ausführungsform der Erfindung dargestellt für eine in ihrer Höhe und Länge verstellbare Lenksäule, bei der die Fixierung der Manteleinheit gegenüber den karosseriefesten Seitenwangen 1, 2 über einen Formschluss bewirkt wird. Zur besseren Übersichtlichkeit sind für jeweils gleichartige Bauteile bzw. Bauteile, die gleichartige Funktionen erfüllen, auch wenn es sich um veränderte Bauteile handelt, dieselben Bezugszeichen verwendet worden, wie sie für die anderen Ausführungsbeispiele verwendet wurden. Alle für dieses Ausführungsbeispiel nicht gesondert erläuterten Merkmale sind in den anderen Ausführungsbeispielen bereits erläutert und entsprechen diesen im Wesentlichen.

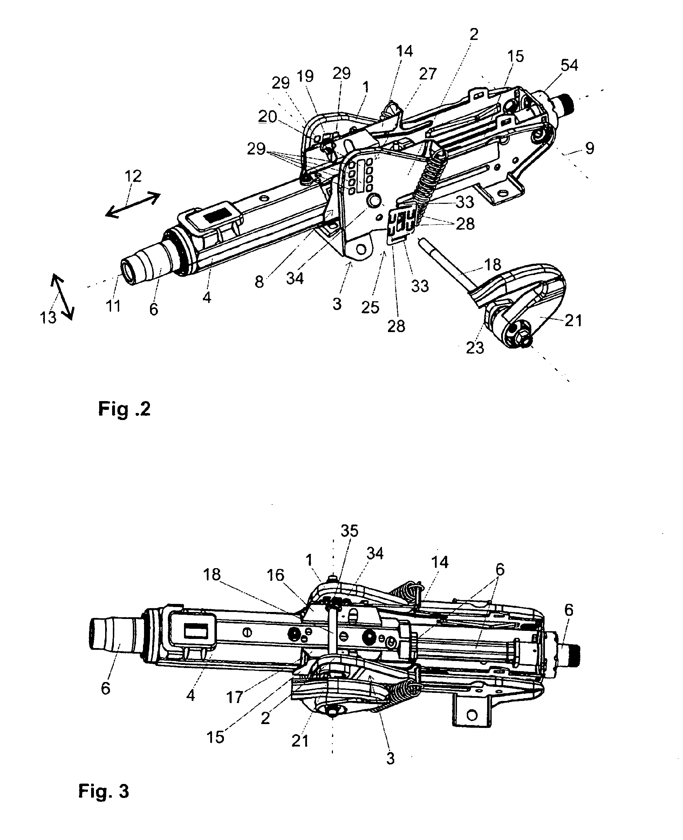

Entsprechend der Ausführungsform der Erfindung gemäß den Fig. 6, 7, 8 und 9 ist die Manteleinheit 4 zwischen den karosseriefesten Seitenwangen 1, 2 der Trageinheit 3 gehalten und lagert drehbar die Lenkspindel 6 drehbar um die Längsachse 11. Die Manteleinheit 4 besitzt ein Langloch 55, das sich parallel zur Längsachse 11 der Lenkspindel 6 (= in Längenverstellrichtung 12) erstreckt, und die Bewegung des Spannbolzens 18, der durch diese Langloch 55 hindurchragt, begrenzt. Parallel zur Längenverstellrichtung 12 und parallel zum Langloch 55 sind auf einer Seite der Manteleinheit eine oder mehrere Verzahnungen 52 als Gegenfeststellelement 26 angeordnet, die im Beispiel integral in die Oberfläche der Manteleinheit 4 eingebracht sind. Diese Verzahnungen 52 können alternativ auch als separate Zahnleisten, die an der Manteleinheit befestigt werden, ausgebildet sein. Die Seitenwangen 1, 2. der Trageinheit 3 besitzen Öffnungen 19, 20, die sich in der zweiten Verstellrichtung 13 erstrecken und, wie im Ausführungsbeispiel entsprechend Fig. 2 und 3, die Bewegung des Spannbolzens 18, der durch dieses Langloch 55 hindurchragt, begrenzen. Parallel zur Verstellrichtung 13 und zur Öffnung 20 ist an der Seitenwange 2 eine Verzahnung 53 als Gegenfeststellelement 27 angeordnet. Auch hier ist im Beispiel die Verzahnung 53 direkt in die Seitenwange 2 eingebracht. Dies kann beispielsweise einfach in der Weise erfolgen, dass der Rand der Öffnung 20 umgebogen und mit der entsprechenden Verzahnung versehen wird. Diese Verzahnungen 53 können alternativ auch als separate Zahnleisten, die an der Seitenwange 2 befestigt werden, ausgebildet sein.

Das erste Feststellelement 24 ist im Ausführungsbeispiel durch Verzahnungen 39 gebildet, die an einem ersten Halteelement 36 befestigt oder mit diesem einstückig ausgebildet sind. Das zweite Feststellelement 25 ist im Beispiel durch Verzahnungen 50, die auf einem zweiten Halteelement 37 gehalten sind, gebildet. Die beiden ersten Feststellelemente 25 sind durch eine Feder 51 in Richtung zum zweiten Gegenfeststellelement 27 vorgespannt, um Toleranzen ausgleichen zu können und sicherzustellen, dass im geschlossenen Zustand der Feststelleinrichtung 10 möglichst viel Klemmspannung in die Manteleinheit 4 eingebracht wird.

Das zweite Halteelement 37 ist im Beispiel einteilig mit der Kulissenscheibe 23 ausgebildet. Eine zweiteilige Ausbildung ist, wie auch in allen anderen Ausführungsbeispielen denkbar und möglich.

In der Fig. 6 ist die Lenksäule in der geschlossenen Stellung der Feststelleinrichtung 10 dargestellt. Durch das Verdrehen des Betätigungshebels 21 wird die Feststelleinrichtung 10 geöffnet und der Spannbolzen 18 verschoben. Durch ein erstes, hier in Form einer Schraubenfeder ausgebildetes federelastisches Element 32 wird das erste Halteelement 36 und damit das Feststellteil und der Spannbolzen soweit verschoben, bis das Anschlagelement 34 mit dem Gegenanschlag 35 in Kontakt kommt. Die Verzahnungen 39 des ersten Feststellelements 24 und die Verzahnungen 52 des ersten Gegenfeststellelement 26 werden voneinander beabstandet, das heißt voneinander getrennt. Das, bevorzugt schwächer ausgebildete, zweite, hier in Form einer Schraubenfeder ausgebildete federelastische Element 33 verschiebt das zweite Halteelement 37 und die damit verbundenen zweiten Feststellelemente 25 bis der gesamte Nockenhub des Verbundes aus Nockenscheibe 22 und Kulissenscheibe 23 ausgeschöpft ist. Dadurch kann sichergestellt werden, dass auch die zweiten Verzahnungen 50 des zweiten Feststellelements 25 von den Verzahnungen 53 des zweiten Gegenfeststellelements 27 beabstandet, das heißt getrennt, werden.

Die Manteleinheit kann im geöffneten Zustand der Feststelleinrichtung 10 innerhalb der Begrenzungen, die durch die Öffnungen 19, 20 in den Seitenwangen und der Langloch 55 in der Manteleinheit 4 gegeben sind, frei in der Höhe oder Neigung und Längenposition, das heißt in der Verstellrichtungen 13 und Längenverstellrichtung 12, bewegt werden. Durch die erfindungsgemäße Lösung wird sichergestellt, dass alle Verzahnungen, die zur Fixierung der Lenksäule im geschlossenen Zustand der Feststelleinrichtung 10 beitragen, voneinander getrennt sind, so dass es keine Verhakungen während der Verstellung gibt.

Zur Bildung der Schwenkachse 9, wie sie in der Ausführungsform gemäß den Figuren 2 und 3 dargestellt ist, kann das (nicht dargestellte) Kardangelenk, das an den vom lenkradseitigen Ende 5 der Lenkspindel abgewandten Seite an der Lenkspindel angeordnet ist verwendet werden. Es ist auch denkbar und möglich, das Lager 54, in dem der Abschnitt der Lenkspindel, der vom lenkradseitigen Ende 5 der Lenkspindel abgewandten Seite an der Lenkspindel angeordnet ist, gelagert ist, an der Trageinheit 3 (unter Umgehung der in dieser Ausführungsform nicht vorhandenen Zwischeneinheit 8) zu befestigen. Dabei muss eine Verdrehbarkeit des Lagers 54 um die Achse 9 gegenüber der Trageinheit 3 ermöglicht werden.

Es ist offensichtlich, dass es ohne weiteres möglich ist, die Merkmale und Elemente der verschiedenen Ausführungsformen der Erfindung miteinander zu kombinieren. So können in einer Anwendung sowohl reibschlüssige Feststellelemente als auch formschlüssigen Feststellelemente mit korrespondierenden Gegenfeststellelementen eingesetzt werden. Für die Erfindung wesentlich ist nur, dass die Beabstandung der Feststellelemente von den korrespondierenden Gegenfeststellelementen durch das entsprechende Anschlagelement 34 in Kombination mit einem Gegenanschlag 35 vordefiniert einstellbar ist.

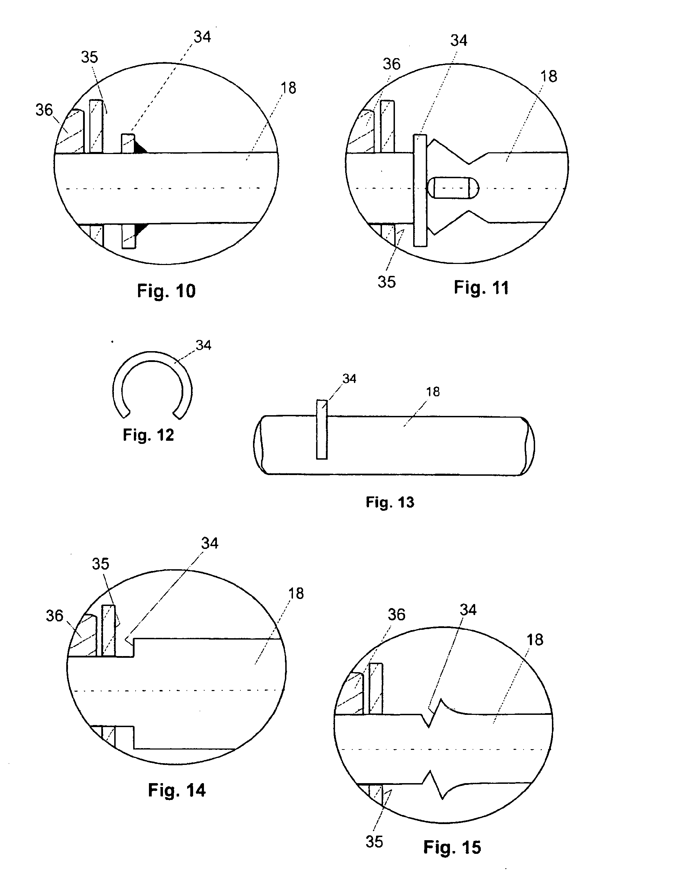

Vorteilhafterweise kann zur axial unverschiebbaren Festlegung eines scheibenförmigen Anschlagelements 34 auf dem Spannbolzen 18 das Anschlagelement auf den Spannbolzen 18 aufgepresst und bei der Montage auf einer vordefinierten Achsposition positioniert sein. Neben der in Fig. 10 schematisch veranschaulichten Schweißverbindung ist auch eine Klebeverbindung beispielsweise denkbar und möglich. Vorteilhaft ist eine Befestigung des Anschlagelements 34 auf dem Spannbolzen 18 durch eine Verstemmung, wie dies in Fig. 11 schematisch dargestellt ist.

Fig. 12 und 13 zeigen weiters eine Ausführung, bei der das Anschlagelement 34 als nicht geschlossener zylindrischer Ring ausgebildet ist, der in einer Art Clipverbindung von der Seite her auf den Spannbolzen aufgepresst wird. Diese Ausführungsform ist als besonders Vorteilhaft anzusehen, da sie sehr einfach zu montieren ist. Allerdings muss durch die Konstruktion eine ausreichend feste Verbindung sichergestellt werden.

Auch eine in axialer Richtung des Spannbolzens durch ein Gewinde verstellbare Ausbildung ist grundsätzlich denkbar und möglich.

Weiters kann das Anschlagelement 34 integral in den Spannbolzen 18 eingearbeitet sein, wie dies in Fig. 14 und 15 veranschaulicht ist. In Fig. 14 ist eine Ausführungsform veranschaulicht, bei der der Spannbolzen 18 zwei Bereiche mit unterschiedlichem Außendurchmesser aufweist, zwischen denen im Übergangsbereich ein Absatz als Anschlagelement 34 ausgebildet ist. Die Fig. 15 zeigt eine Ausführungsform, bei der das Anschlagelement 34 durch einen Absatz im Spannbolzen gebildet wird, der durch eine Umformoperation, ähnlich einer Verstemmung, in die Mantelfläche des Spannbolzens eingebracht ist. Die mit der Umformoperation einhergehende Materialverlagerung führt in einem bestimmten Axialbereich zu einer Durchmesserreduktion und in einem direkt benachbarten Axialbereich zu einer Durchmesseraufweitung. Auf diese Art wird ein Anschlagelement 34 ausgebildet, das sogar eine einem Freistich äquivalente Form aufweist, die sicherstellt, dass sich der Gegenanschlag 35 nicht mit dem Spannbolzen 18 in der Nähe des Anschlagelements 34 verklemmt. Es ist dabei denkbar und möglich, anstelle der Verstemm- oder Pressoperation auch eine umlaufende Walzoperation einzusetzen.

Das Zusammenwirken der Feststellelemente 24, 25 und Gegenfeststellelemente 26, 27 im geschlossenen Zustand der Feststelleinrichtung kann reibschlüssig und/oder formschlüssig sein, wobei auf den gegenüberliegenden Seiten der Manteleinheit 4 auch unterschiedliche Arten des Zusammenwirkens vorgesehen sein können, beispielsweise auf einer Seite reibschlüssig und auf der anderen Seite formschlüssig. Die Gegenfeststellelemente 26, 27 können hierbei von separaten, an den von der Manteleinheit 4 weggerichteten Außenflächen der Seitenwangen 1, 2 festgelegte Teile sein oder auch einstückig mit den Seitenwangen 1, 2 ausgebildet sein. Beispielsweise können sie im letzteren Fall bei einer rein reibschlüssigen Verbindung zwischen dem Feststellelement 24 bzw. 25 und Gegenfeststellelement 26 bzw. 27 von den außenliegenden, Reibflächen bildenden Oberflächen der Seitenwangen 1, 2 gebildet werden.

Beispielsweise im Falle einer nur in die Längsverstellrichtung 12 verstellbaren Lenksäule könnte das Zusammenwirken der Feststellelemente 24, 25 mit den Gegenfeststellelementen 26, 27 auch nur zum Übertragen von Druckkräften auf die Seitenwangen 1, 2 dienen, um diese an die dazwischen liegenden Teile anzudrücken.

Die Feststellung in die Längenverstellrichtung 12 erfolgt in den dargestellten Ausführungsbeispielen, abgesehen von den Ausführungsbeispielen entsprechend den Fig. 6, 7, 8 und 9, lediglich durch zusammenwirkende Reibflächen. Auch für diese Feststellung könnten formschlüssig oder reib- und formschlüssig zusammenwirkende Elemente vorgesehen sein, wie dies beispielsweise aus dem eingangs genannten Stand der Technik bekannt ist oder im Ausführungsbeispiel entsprechend den Fig. 6, 7, 8 und 9 zu entnehmen sind.

Eine sowohl in die Längenverstellrichtung 12 als auch in die Verstellrichtung 13 der Höhen- bzw. Neigungsverstellung verstellbare Lenksäule kann auch ohne eine Zwischeneinheit 8 ausgebildet sein, wie dies ebenfalls bekannt ist, und dem Ausführungsbeispiel entsprechend den Fig. 6, 7, 8 und 9 zu entnehmen ist. Die Verschwenkbarkeit der Manteleinheit 4 gegenüber der Trageinheit 3 zur Höhen- bzw. Neigungsverstellung könnte alternativ durch parallel zur Längsachse 11 der Lenkspindel 6 sich erstreckende Langlöcher, in welche Schwenkzapfen eingreifen bewirkt werden oder diese Schwenkachse könnte von einem zwei Lenkspindelabschnitte verbindenden Kardangelenk gebildet werden. Derartige Ausbildungen sind ebenfalls bekannt.

Der Gegenanschlag 35 könnte, insbesondere auch bei einer Ausbildung ohne eine Zwischeneinheit 8, auch an der Innenfläche der ersten Seitenwange 1 (also an der zur zweiten Seitenwange 2 gerichteten Fläche) oder an einer Innenfläche der Manteleinheit 4 (die also der die Längsachse 11 durchsetzenden, parallel zu den Seitenwangen 1, 2 liegenden vertikalen Mittelebene zugewandt ist) angeordnet sein.

Anstelle einer Nockenscheibe 22 und einer Kulissenscheibe 23 könnten auch andere Spannelemente zur axialen Verschiebung des Spannbolzens 18 gegenüber den Seitenwangen 1, 2 und zur axialen Verschiebung des zweiten Feststellelementes 25 gegenüber dem Spannbolzen 18 vorgesehen sein. Insbesondere sind dabei auch Systeme, bei denen Wälzkörpern auf Nockenbahnen geführt werden, vorteilhaft einzusetzen.

Es ist ebenso denkbar und möglich, den Betätigungshebel 21 auf der vom Nocken-Kulissenscheiben-Paar abgewandten Seite der Spannachse oder an einer anderen Axialposition auf der Spannachse anzuordnen.

Die Erfindung ist auch im Fall von elektrisch oder hydraulisch oder pneumatisch ansteuerbaren Feststelleinrichtungen anwendbar.

**Legende**

| | | | |
|---|---|---|---|
| zu den Hinweisziffern: | | | |
| 1 | erste Seitenwange | 26 | erstes Gegenfeststellelement |
| 2 | zweite Seitenwange | 27 | zweites Gegenfeststellelement |
| 3 | Trageinheit | 28 | Schuppe |
| 4 | Manteleinheit | 29 | Vertiefung |
| 5 | lenkradseitiges Ende | 30 | Mutter |
| 6 | Lenkspindel | 31 | Scheibe |
| 7 | Verbindungsabschnitt | 32 | erstes federelastisches Element |
| 8 | Zwischeneinheit | 33 | zweites federelastisches Element |
| 9 | Achse | 34 | Anschlagelement |
| 10 | Feststelleinrichtung | 35 | Gegenanschlag |
| 11 | Längsachse | 36 | erstes Halteelement |
| 12 | Längenverstellrichtung | 37 | zweites Halteelement |
| 13 | Verstellrichtung | 38 | Sicke |
| 14 | Seitenschenkel | 39 | erste Verzahnung |
| 15 | Seitenschenkel | 50 | zweite Verzahnung |
| 16 | Steg | 51 | Feder |
| 17 | Steg | 52 | Verzahnung |
| 18 | Spannbolzen | 53 | Verzahnung |
| 19 | Öffnung | 54 | Lager |
| 20 | Öffnung | 55 | Langloch |
| 21 | Betätigungshebel | | |
| 22 | Nockenscheibe | | |
| 23 | Kulissenscheibe | | |
| 24 | erstes Feststellelement | | |
| 25 | zweites Feststellelement | | |

## Patentansprüche

1. Verstellbare Lenksäule für ein Kraftfahrzeug, umfassend eine Manteleinheit (4), die eine Lenkspindel (6) drehbar lagert, erste und zweite karosseriefest befestigbare Seitenwangen (1, 2), zwischen denen die Manteleinheit (4) angeordnet ist, eine Feststelleinrichtung (10), in deren geöffnetem Zustand die Manteleinheit (4) gegenüber den Seitenwangen (1, 2) zumindest in eine Verstellrichtung (12, 13) verstellbar ist und in deren geschlossenem Zustand die eingestellte Position der Manteleinheit (4) gegenüber den Seitenwangen (1, 2) festgestellt ist und die einen die Seitenwangen (1, 2) durch Öffnungen (19, 20) durchsetzenden Spannbolzen (18), der beim Öffnen und Schließen der Feststelleinrichtung (10) in seiner axialen Richtung verschoben wird, und erste und zweite Feststellelemente (24, 25) umfasst, zwischen denen die Manteleinheit (4) angeordnet ist und von denen das erste Feststellelement (24) im geschlossenen Zustand der Feststelleinrichtung (10) mit einem ersten Gegenfeststellelement (26) zusammenwirkt, das an der ersten Seitenwange (1) angeordnet ist oder von dieser gehalten wird oder an der Manteleinheit (4) angeordnet ist oder von dieser gehalten wird oder an einer zwischen der Manteleinheit (4) und den Seitenwangen (1, 2) angeordneten Zwischeneinheit (8) angeordnet ist oder von dieser gehalten wird, und von denen das zweite Feststellelement (25) im geschlossenen Zustand der Feststelleinrichtung (10) mit einem zweiten Gegenfeststellelement (27) zusammenwirkt, das an der zweiten Seitenwange (2) angeordnet ist oder von dieser gehalten wird oder an der Manteleinheit (4) angeordnet ist oder von dieser gehalten wird oder an der Zwischeneinheit (8) angeordnet ist oder von dieser gehalten wird, **dadurch gekennzeichnet, dass** auf dem oder am Spannbolzen (18) im Bereich zwischen den beiden Seitenwangen (1, 2) ein Anschlagelement (34) angeordnet ist, welches im geschlossenen Zustand der Feststelleinrichtung (10) von einem Gegenanschlag (35) beabstandet ist, der an einer der Seitenwangen (1, 2) oder einem mit dieser verbundenen Teil oder an der Manteleinheit (4) oder einem mit dieser verbundenen Teil oder an der Zwischeneinheit (8) oder einem mit dieser verbundenen Teil angeordnet ist, und von dem im geöffneten Zustand der Feststelleinrichtung (10) durch sein Zusammenwirken mit dem Anschlagelement (34) die axiale Verschiebung des Spannbolzens (18) begrenzt wird.

2. Verstellbare Lenksäule nach Anspruch 1, **dadurch gekennzeichnet, dass** sich das erste Feststellelement (24) bei der axialen Verschiebung des Spannbolzens (18) beim Öffnen und Schließen der Feststelleinrichtung (10) mit dem Spannbolzen (18) mitbewegt.

3. Verstellbare Lenksäule nach Anspruch 1 oder 2, **dadurch gekennzeichnet, dass** das erste Feststellelement (24) auf dem Spannbolzen (18) angeordnet ist und vom Spannbolzen (18) durch eine Öffnung durchsetzt wird.

4. Verstellbare Lenksäule nach einem der Ansprüche 1 bis 3, **dadurch gekennzeichnet, dass** das zweite Feststellelement (25) sich beim Öffnen und Schließen der Feststelleinrichtung (10) gegenüber dem Spannbolzen (18) in axialer Richtung des Spannbolzens (18) verschiebt.

5. Verstellbare Lenksäule nach einem der Ansprüche 1 bis 4, **dadurch gekennzeichnet, dass** das zweite Feststellelement (25) auf dem Spannbolzen (18) angeordnet ist und vom Spannbolzen (18) durch eine Öffnung durchsetzt wird.

6. Verstellbare Lenksäule nach einem der Ansprüche 1 bis 5, **dadurch gekennzeichnet, dass** mindestens ein erstes federelastisches Element (32) vorhanden ist, welches beim Öffnen der Feststelleinrichtung (4) den Spannbolzen (18) axial verschiebt, bis das Anschlagelement (34) in Anlage an den Gegenanschlag (35) gelangt.

7. Verstellbare Lenksäule nach Anspruch 6, **dadurch gekennzeichnet, dass** das mindestens eine erste federelastische Element mit dem ersten Feststellelement (24) zusammenwirkt oder von einem Teil des ersten Feststellelements (24) gebildet wird und beim Öffnen der Feststelleinrichtung (10) das erste Feststellelement (24) in axialer Richtung des Spannbolzens (18) verschiebt und hierbei den Spannbolzen (18) mitnimmt.

8. Verstellbare Lenksäule nach Anspruch 6 oder 7, **dadurch gekennzeichnet, dass** mindestens ein zweites federelastisches Element (33) vorhanden ist, dessen Federkraft kleiner als die Federkraft des ersten federelastische Elementes ausgebildet ist und welches beim Öffnen der Feststelleinrichtung (10) nach Anlage des Anschlagelements (34) am Gegenanschlag (35) das zweite Feststellelement (25) vom zweiten Gegenfeststellelement (27) beabstandet.

9. Verstellbare Lenksäule nach einem der Ansprüche 1 bis 8, **dadurch gekennzeichnet, dass** im geschlossenen Zustand der Feststelleinrichtung (10) das Zusammenwirken des ersten Feststellelements (24) mit dem ersten Gegenfeststellelement (26) und/oder das Zusammenwirken des zweiten Feststellelements (25) mit dem zweiten Gegenfeststellelement (27) eine Haltekraft gegen eine Verstellung der Lenksäule in eine die Höhe bzw. Neigung der Lenksäule verstellende Verstellrichtung (13) bewirkt.

10. Verstellbare Lenksäule nach einem der Ansprüche 1 bis 9, **dadurch gekennzeichnet, dass** die Lenksäule im geöffneten Zustand der Feststelleinrichtung (10) sowohl in ihrer Länge als auch in ihrer Höhe bzw. Neigung verstellbar ist.

11. Verstellbare Lenksäule nach einem der Ansprüche 1 bis 10, **dadurch gekennzeichnet, dass** die zwischen der Manteleinheit (4) und den Seitenwangen (1, 2) angeordnete Zwischeneinheit (8) im geöffneten Zustand der Feststelleinrichtung (10) zur Verstellung der Lenksäule in ihrer Höhe bzw. Neigung gegenüber den Seitenwangen (1, 2) um eine rechtwinkelig zur Längsachse (11) der Lenkspindel (6) stehende und horizontal liegende Achse (9) verschwenkbar ist.

12. Verstellbare Lenksäule nach einem der Ansprüche 1 bis 11, **dadurch gekennzeichnet, dass** die Zwischeneinheit (8) zwischen der jeweiligen Seitenwange (1, 2) und der Manteleinheit (4) liegende erste und zweite Seitenschenkel (14, 15) aufweist.

13. Verstellbare Lenksäule nach einem der Ansprüche 1 bis 12, **dadurch gekennzeichnet, dass** die erste und zweite Seitenwange (1, 2) Teile einer insgesamt an der Karosserie des Kraftfahrzeuges befestigbaren Trageinheit (3) sind.

14. Verstellbare Lenksäule nach einem der Ansprüche 1 bis 13, **dadurch gekennzeichnet, dass** die beiden Seitenwangen (1, 2) zwischen dem ersten Feststellelement (24) und dem zweiten Feststellelement (25) angeordnet sind.

## Claims

1. An adjustable steering column for a motor vehicle, comprising a casing unit (4), bearing a steering spindle (6) in a rotatable manner, first and second lateral cheeks (1, 2), securable in a bodywork-fixed manner, between which the casing unit (4) is arranged, a fixing device (10) in the opened state of which the casing unit (4) is adjustable with respect to the lateral cheeks (1, 2) in at least one adjustment direction (12, 13) and in the closed state of which the adjusted position of the casing unit (4) with respect to the lateral cheeks (1, 2) is fixed and which comprises a clamping bolt (18), passing through openings (19, 20) in the lateral cheeks (1, 2) and displaced in its axial direction upon opening and closing of the fixing device (10), and first and second fixing elements (24, 25) between which the casing unit (4) is arranged and of which the first fixing element (24) cooperates in the closed state of the fixing device (10) with a first counter fixing element (26) which is arranged on the first lateral cheek (1) or is held by the latter or is arranged on the casing unit (4) or is held by the latter or is arranged on an intermediate unit (8) arranged between the casing unit (4) and the lateral cheeks (1, 2) or is held by the latter and of which the second fixing element (25) cooperates in the closed state of the fixing device (10) with a second counter fixing element (27) which is arranged on the second lateral cheek (2) or is held by the latter or is arranged on the casing unit (4) or is held by the latter or is arranged on the intermediate unit (8) or is held by the latter, **characterised in that** a stop element (34) is arranged in the region between the two lateral cheeks (1, 2) and upon or on the clamping bolt (18), which stop element (34) is in the closed state of the fixing device (10) at a distance from a counter stop (35) which is arranged on one of the lateral cheeks (1, 2) or on a part connected to the latter or on the casing unit (4) or on a part connected to the latter or on the intermediate unit (8) or a part connected to the latter and by which in the opened state of the fixing device (10) the axial displacement of the clamping bolt (18) is bounded by its cooperation with the stop element (34).

2. An adjustable steering column according to claim 1, **characterised in that** the first fixing element (24) is entrained with the clamping bolt (18) upon the axial displacement of the clamping bolt (18) upon opening and closing of the fixing device (10).

3. An adjustable steering column according to claim 1 or 2, **characterised in that** the first fixing element (24) is arranged on the clamping bolt (18) and the clamping bolt (18) passes through an opening therein.

4. An adjustable steering column according to any one of claims 1 to 3, **characterised in that** upon opening and closing of the fixing device (10), the second fixing element (25) moves in an axial direction of the clamping bolt (18) with respect to the clamping bolt (18).

5. An adjustable steering column according to any one of claims 1 to 4, **characterised in that** the second fixing element (25) is arranged on the clamping bolt (18) and the clamping bolt (18) passes through an opening therein.

6. An adjustable steering column according to any one of claims 1 to 5, **characterised in that** at least one first resilient element (32) is present, which upon opening of the fixing device (4) displaces the clamping bolt (18) axially until the stop element (34) comes into contact with the counter stop (35).

7. An adjustable steering column according to claim 6, **characterised in that** the at least one first resilient element cooperates with the first fixing element (24) or is formed by a part of the first fixing element (24) and upon opening of the fixing device (10) displaces the first fixing element (24) in an axial direction of the clamping bolt (18) and in doing so entrains the clamping bolt (18).

8. An adjustable steering column according to claim 6 or 7, **characterised in that** at least one second resilient element (33) is present, whose elastic force is smaller than the elastic force of the first resilient element and which upon opening of the fixing device (10) distances the second fixing element (25) from the second counter fixing element (27) after contact of the stop element (34) with the counter stop (35).

9. An adjustable steering column according to any one of claims 1 to 8, **characterised in that** in the closed state of the fixing device (10), the cooperation of the first fixing element (24) with the first counter fixing element (26) and/or the cooperation of the second fixing element (25) with the second counter fixing element (27) effects a holding force against an adjustment of the steering column in an adjustment direction (13) adjusting the height or inclination of the steering column.

10. An adjustable steering column according to any one of claims 1 to 9, **characterised in that** in the opened state of the fixing device (10), the steering column is adjustable in both its length and its height or inclination.

11. An adjustable steering column according to any one of claims 1 to 10, **characterised in that** the intermediate unit (8), arranged between the casing unit (4) and the lateral cheeks (1, 2), is in the opened state of the fixing device (10) pivotable, for adjustment of the steering column in its height or inclination, with respect to the lateral cheeks (1, 2) about an axis (9) lying horizontally and being at right angles to the longitudinal axis (11) of the steering spindle (6).

12. An adjustable steering column according to any one of claims 1 to 11, **characterised in that** the intermediate unit (8) has first and second lateral limbs (14, 15) lying between the respective lateral cheek (1, 2) and the casing unit (4).

13. An adjustable steering column according to any one of claims 1 to 12, **characterised in that** the first and second lateral cheek (1, 2) are parts of a bearing unit (3) securable as a whole to the bodywork of the motor vehicle.

14. An adjustable steering column according to any one of claims 1 to 13, **characterised in that** the two lateral cheeks (1, 2) are arranged between the first fixing element (24) and the second fixing element (25).

## Revendications

1. Colonne de direction réglable pour un véhicule automobile, comprenant une unité de fourreau (4) où est logé un axe de direction (6) rotatif, un premier et un deuxième flasques latéraux (1, 2) fixables de manière inamovible sur la carrosserie, entre lesquels l'unité de fourreau (4) est disposée, un dispositif de blocage (10), en état d'ouverture duquel l'unité de fourreau (4) est réglable au moins dans une direction de réglage (12, 13) par rapport aux flasques latéraux (1, 2) et en état de fermeture duquel la position réglée de l'unité de fourreau (4) est fixée par rapport aux flasques latéraux (1, 2), et qui comprend un boulon de serrage (18) traversant les flasques latéraux (1, 2) par des ouvertures (19, 20), ce dernier étant déplacé dans sa direction axiale à l'ouverture et à la fermeture du dispositif de blocage (10), et un premier et un deuxième éléments de blocage (24, 25), entre lesquels l'unité de fourreau (4) est disposée et dont, en état de fermeture du dispositif de blocage (10), le premier élément de blocage (24) coopère avec un premier contre-élément de blocage (26) disposé contre le premier flasque latéral (1) ou maintenu par celui-ci, ou disposé contre l'unité de fourreau (4) ou maintenu par celle-ci, ou disposé contre une unité intercalaire (8) située entre l'unité de fourreau (4) et les flasques latéraux (1, 2) ou maintenue par celle-ci, et dont, en état de fermeture du dispositif de blocage (10), le deuxième élément de blocage (25) coopère avec un deuxième contre-élément de blocage (27) disposé contre le deuxième flasque latéral (2) ou maintenu par celui-ci, ou disposé contre l'unité de fourreau (4) ou maintenu par celle-ci, ou disposé contre l'unité intercalaire (8) ou maintenu par celle-ci, **caractérisée en ce qu'**un élément de butée (34) est disposé sur le boulon de serrage (18) ou fait partie de celui-ci, dans la zone entre les deux flasques latéraux (1, 2), lequel, en état de fermeture du dispositif de blocage (10), est espacé d'une contre-butée (35) disposée contre un des flasques latéraux (1, 2) ou une pièce raccordée à celui-ci, ou contre l'unité de fourreau (4) ou une pièce raccordée à celle-ci, ou contre l'unité intercalaire (8) ou une pièce raccordée à celle-ci, et par lequel le déplacement axial du boulon de serrage (18) est limité par sa coopération avec l'élément de butée (34) en état d'ouverture du dispositif de blocage (10).

2. Colonne de direction réglable selon la revendication 1, **caractérisée en ce que** le premier élément de blocage (24) se déplace conjointement au boulon de serrage (18) lors du déplacement axial du boulon de serrage (18) à l'ouverture et à la fermeture du dispositif de blocage (10).

3. Colonne de direction réglable selon la revendication 1 ou 2, **caractérisée en ce que** le premier élément de blocage (24) est disposé sur le boulon de serrage (18) et est traversé par le boulon de serrage (18) passant dans une ouverture.

4. Colonne de direction réglable selon l'une des revendications 1 à 3, **caractérisée en ce que** le deuxième élément de blocage (25) se déplace par rapport au boulon de serrage (18) dans la direction axiale du boulon de serrage (18) à l'ouverture et à la fermeture du dispositif de blocage (10).

5. Colonne de direction réglable selon l'une des revendications 1 à 4, **caractérisée en ce que** le deuxième élément de blocage (25) est disposé sur le boulon de serrage (18) et est traversé par le boulon de serrage (18) passant dans une ouverture

6. Colonne de direction réglable selon l'une des revendications 1 à 5, **caractérisée en ce qu'**au moins un premier élément élastique (32) est présenté, lequel déplace axialement le boulon de serrage (18) à l'ouverture du dispositif de blocage (4), jusqu'à ce que l'élément de butée (34) arrive en butée contre la contre-butée (35).

7. Colonne de direction réglable selon la revendication 6, **caractérisée en ce que** le ou les premiers éléments élastiques coopèrent avec le premier élément de blocage (24) ou sont formés par une partie du premier élément de blocage (24) et déplacent le premier élément de blocage (24) dans la direction axiale du boulon de serrage (18) à l'ouverture du dispositif de blocage (10) en entraînant le boulon de serrage (18).

8. Colonne de direction réglable selon la revendication 6 ou la revendication 7, **caractérisée en ce qu'**au moins un deuxièmes élément élastique (33) est présent, dont la résilience est prévue inférieure à la résilience du premier élément élastique, et qui espace le deuxième élément de blocage (25) du deuxième contre-élément de blocage (27), à l'ouverture du dispositif de blocage (10) après butée de l'élément de butée (34) contre la contre-butée (35).

9. Colonne de direction réglable selon l'une des revendications 1 à 8, **caractérisée en ce qu'**en état de fermeture du dispositif de blocage (10), la coopération du premier élément de blocage (24) avec le premier contre-élément de blocage (26) et/ou la coopération du deuxième élément de blocage (25) avec le deuxième contre-élément de blocage (27) génèrent une force de maintien contre un déplacement de la colonne de direction dans une direction de réglage (13) ajustant la hauteur ou l'inclinaison de la colonne de direction.

10. Colonne de direction réglable selon l'une des revendications 1 à 9, **caractérisée en ce que** la colonne de direction est réglable en longueur ainsi qu'en hauteur ou en inclinaison en état d'ouverture du dispositif de blocage (10).

11. Colonne de direction réglable selon l'une des revendications 1 à 10, **caractérisée en ce que**, pour le réglage en hauteur ou en inclinaison de la colonne de direction par rapport aux flasques latéraux (1, 2), l'unité intercalaire (8) disposée entre l'unité de fourreau (4) et les flasques latéraux (1, 2) est pivotante autour d'un axe (9) horizontal et perpendiculaire à l'axe longitudinal (11) de l'axe de direction (6) en état d'ouverture du dispositif de blocage (10).

12. Colonne de direction réglable selon l'une des revendications 1 à 11, **caractérisée en ce que** l'unité intercalaire (8) présente une première et une deuxième aile latérale (14, 15) entre le flasque latéral correspondant (1, 2) et l'unité de fourreau (4).

13. Colonne de direction réglable selon l'une des revendications 1 à 12, **caractérisée en ce que** le premier et le deuxième flasque latéraux (1, 2) font partie d'une unité de support (3) fixable sur la carrosserie du véhicule automobile dans son ensemble.

14. Colonne de direction réglable selon l'une des revendications 1 à 13, **caractérisée en ce que** les deux flasques latéraux (1, 2) sont disposés entre le premier élément de blocage (24) et le deuxième élément de blocage (25).
